# EUROPÄISCHE PATENTANMELDUNG

(11) **EP 4 056 652 A1**
(43) Veröffentlichungstag der Anmeldung: **14.09.2022**
(21) Anmeldenummer: 21162179.2
(22) Anmeldetag: 11.03.2021
(51) Int. Cl.: C08L 75/04, C08L 101/10

(54) **ALTERUNGSBESTÄNDIGE FEUCHTIGKEITSHÄRTENDE ZUSAMMENSETZUNGEN**

(71) Anmelder: Covestro Deutschland AG, 51373 Leverkusen (DE)
(72) Erfinder: JESKE, Winfried, 51399 Burscheid (DE); NATTKE, Ute, 51375 Leverkusen (DE)
(74) Vertreter: Levpat

(57) **Zusammenfassung**

Die vorliegende Erfindung betrifft alterungsbeständige feuchtigkeitshärtende Zusammensetzungen auf Basis silanfunktioneller Prepolymere, die aminofunktionelle Verbindungen als Alterungsschutzmittel enthalten. Die daraus erhältlichen gehärteten Zusammensetzungen, sowie die Verwendung dieser feuchtigkeitshärtenden Zusammensetzungen, bzw. der gehärteten Zusammensetzungen als Dichtstoffe, Klebstoffe und Beschichtungen.

## Beschreibung

Die vorliegende Erfindung betrifft alterungsbeständige feuchtigkeitshärtende Zusammensetzungen auf Basis silanfunktioneller Prepolymere, die aminofunktionelle Verbindungen als Alterungsschutzmittel enthalten. Die daraus erhältlichen gehärteten Zusammensetzungen, sowie die Verwendung dieser feuchtigkeitshärtenden Zusammensetzungen, bzw. der gehärteten Zusammensetzungen als Dichtstoffe, Klebstoffe und Beschichtungen.

Zusammensetzungen auf Basis silanfunktioneller Prepolymere (insbesondere silanterminierter Prepolymere, kurz STP) und deren Verwendung als Klebstoffe, Dichtstoffe und Beschichtungen sind seit längerem bekannt. Der Vernetzungsmechanismus dieser Silane erfolgt über einen zweistufigen Prozess: Als erstes wird durch umgebende Luftfeuchtigkeit eine Alkoxysilangruppe zu einer Hydroxysilangruppe hydrolsiert. Diese Hydroxysilangruppe kann in einem zweiten Schritt mit einer Alkoxysilangruppe oder einer zweiten Hydroxysilangruppe kondensieren. Nach vollständiger Hydrolyse bildet sich ein Netzwerk aus Siloxangruppen.

Unter einer "Silangruppe" wird eine chemische Gruppe verstanden, die ein Siliziumatom umfasst, welches einerseits mindestens eine kovalente Silizium-Kohlenstoffbindung besitzt und welches andererseits nicht über ein Sauerstoffatom mit einem weiteren Siliziumatom verknüpft ist. Gruppen, die mindestens zwei Siliziumatome enthalten, welche über ein Sauerstoffatom miteinander verknüpft sind, d.h. ein (Si-O-Si)-Strukturfragment enthalten, sind Siloxangruppen.

Als silanterminierte Prepolymere (STP) werden silanfunktionelle Prepolymere bezeichnet, die jeweils an den Enden (Termini) des Prepolymerrückgrats Silangruppen aufweisen.

Für die Synthese von silanfunktionellen Prepolymeren, insbesondere von silanterminierten Prepolymeren, gibt es mehrere Möglichkeiten: Einmal kann ein Alkoxysilan über eine isocyanatreaktive Gruppe als funktionelle Gruppe, wie Hydroxy, Amino oder Mercapto, an ein isocyanathaltiges Polyurethanprepolymer gebunden werden. Alternativ kann ein isocyanatfunktionelles Alkoxysilan an ein Polymer gebunden werden, welches isocyanatreaktive Gruppen, wie beispielsweise Hydroxy, Amino oder Mercapto trägt. Eine weitere Möglichkeit zur Herstellung von silanterminierten Prepolymeren ist die Hydrosilylierung von Doppelbindungen.

Darüber hinaus gibt es noch weitere Möglichkeiten zur Herstellung von alkoxysilanhaltigen Prepolymeren. So kann man auch polymere Polyisocyanate, die durch Oligomerisierung von monomeren Diisocyanaten hergestellt werden, mit einem Alkoxysilan, welches eine isocyanatreaktive Gruppe enthält, umsetzen.

Alkoxysilangruppenhaltige Prepolymere können auch durch Polymerisierung von Epoxiden enthalten werden, dadurch dass in der Reaktionsmischung Epoxide enthalten sind, die Alkoxysilangruppen umfassen. In der EP 2 093 244 wird ein Verfahren beschrieben, mit dessen Hilfe aus Epoxiden (wie beispielsweise Propylenoxid und Alkoxysilan-haltigen Epoxiden) Alkoxysilangruppen-haltige Polyether hergestellt werden. Die Alkoxysilangruppen können in besagtem Polyether beliebig blockartig aneinandergereiht oder statistisch in die modifizierte Polymerkette eingebaut sein. Siehe hierzu insbesondere die Beispiele 1-4 dieser Druckschrift. Im Gegensatz zu den oben beschriebenen Prepolymeren sind die Alkoxysilane nicht nur an den Termini der Ketten angebunden. Die Offenlegungsschriften DE 10 2010 038 768, DE 10 2010 038 774 und DE 10 2011 006 313 offenbaren Weiterentwicklungen der Alkoxysilangruppen-haltigen Polyether gemäß Verfahren der EP 2 093 244.

In der DE 10 2010 038 768 und DE 10 2010 038 774 werden Möglichkeiten beschrieben, die terminalen OH-Gruppen dieser Alkoxysilanpolyether so zu stabilisieren oder zu blockieren, dass keine unerwünschte Kondensation dieser OH-Gruppen mit den Alkoxysilanen stattfinden können. Die diesen Patentanmeldungen zugrundeliegenden Alkoxysilanpolyether werden gemäß dem in der EP 2 093 244 zugrundeliegenden Verfahren hergestellt und an der terminalen OH-Gruppe verändert.

Gemäß technischer Lehre der Patentschrift DE 10 2011 006 313 werden längerkettige Polyether als in den drei zuvor genannten Druckschriften als Startmoleküle verwendet, ansonsten basiert die Synthese der beschriebenen Polymere ebenfalls auf der Lehre der EP 2 093 244.

Eine weitere Möglichkeit, alkoxysilanhaltige Polymere herzustellen, basiert auf der Umsetzung ungesättigter Verbindungen. Einmal kann man eine polymere Verbindung mit ungesättigten Gruppen mit einem Hydrosilan im Rahmen einer Hydrosilylierung der Doppelbindung umsetzen. Eine weitere Möglichkeit ist die Copolymerisation von ungesättigten Monomeren mit C=C-Doppelbindungen mit solchen Monomeren mit polymerisierbaren C=C-Doppelbindungen, die eine Alkoxysilangruppe tragen. Zur Diskussion dieser beiden Möglichkeiten siehe US 4 368 297, Spalte 3, Zeilen 37-42. In der US 4368 297 wird gemäß Beispiel 1 die Hydrosilylierung eines Allylgruppen-haltigen Acrylatpolymers mit Methyldimethoxysilan beschrieben. Die Beispiele 6 und 7 offenbaren die radikalische Polymerisation ungesättigter momomerer Verbindungen ohne Alkoxysilanrest (Methacrylatverbindungen und Maleinsäureanhydrid) in Gegenwart von Anteilen Alkoxysilanhaltiger Methacrylatverbindungen. Die US 5 886 125 beschreibt die Copolymerisierung von Hydroxypropylmethacrylat, einem ungesättigten silanfreien Monomer, und Vinyltrimethoxysilan. In der WO 00/55229 werden ebenfalls für Alkoxysilan-haltige Polymere aus ungesättigten Monomeren Beispiele genannt. Die Synthese des Silanpolymers 1 (Seite 15, Zeile 25) erfolgt durch radikalische Polymerisation von Styrol, Isobornylmethacrylat und zwei weiteren silanfreien Monomeren, mit Methacroyloxypropyltrimethoxysilan. Ähnliche Produkte aus silanfreien Acrylaten, Styrol und Vinylsilan werden in WO 03/078486 in den Beispielen 1-11 beschrieben. In EP 2 011 834 beschreibt Beispiel 1 die Hydrosilylierung eines Allylgruppen-haltigen Polymers mit Trimethoxysilan.

Das Polymerrückgrat ist aber nicht allein auf die oben beschriebenen Gruppen (Polyurethanprepolymere, polymere Polyisocyanate, Epoxid- und C=C-Gruppen-haltige Polymere beschränkt. Darüber hinaus sind auch viele andere Gruppen denkbar, wie sie in der EP 2 011 834 in Spalte [016] genannt sind.

Silanfunktionelle Prepolymere, insbesondere silanterminierte Prepolymere (STP), bilden die Basis zur Herstellung elastischer Dichtstoffe oder Klebstoffe, insbesondere Parkettklebstoffe. Durch geschickte Auswahl von weiteren Zusätzen wie Bindemitteln, Füllstoffen, Weichmachern und anderen Additiven lassen sich mechanische und chemische Eigenschaften und Aushärtungsgeschwindigkeiten gezielt einstellen. Elastische Klebstoffe haben sich in der Industrie, in Reparaturbetrieben, bei Werkstätten, Handwerkern und Heimwerkern einen festen Platz erobert, so z.B. im Fahrzeugbau, in der Bauwirtschaft oder im Schiffs- und Flugzeugbau.

Zu den Vorteilen der Systeme auf Basis von silanfunktionellen Prepolymeren gegenüber Polyurethan-basierten, über reaktive NCO-Gruppen vernetzenden Systemen gehört, dass eine unerwünschte Blasenbildung durch Kohlendioxid in dicken Schichten unterbleibt und in vielen Fällen auf die Aufbringung einer Haftungsvermittelnden Schicht verzichtet werden kann.

Die Verwendung von Antioxidantien kann die Langzeitstabilität von Klebstoff-, Dichtstoff- und Beschichtungsformulierungen auf Basis von silanfunktionellen Prepolymeren erhöhen. Bislang finden in solchen Formulierungen nur phenolische Antioxidantien Verwendung. Solche phenolische Antioxidantien werden beispielsweise unter den Handelsnamen Irganox^{®}, Tinuvin^{®} und Vulkanox^{®} kommerzialisiert.

Die erzielte Verbesserung der Alterungs- und Oxidationsbeständigkeit durch Einsatz der Alterungsschutzmittel gemäß dem Stand der Technik reicht häufig nicht aus. Dies kann zu vorzeitiger Versprödung oder Erweichung von Klebverbindungen, Dichtungen und Beschichtungen und zu deren Versagen führen.

Es hat sich gezeigt, dass die im Markt befindlichen Parkettklebstoffe auf Basis silanfunktioneller Prepolymere nicht in allen Fällen den Anforderungen an Langlebigkeit der Klebverbindung genügen, wenn sie so eingesetzt werden, dass die Klebverbindung einer erhöhten thermischen Belastung ausgesetzt wird (Boden Wand Decke, Ausgabe 1/2016, Seite 48). Auf Grund der thermischen Belastung können solche Klebstoffe vom festen in einen weichen, pastösen, bröseligen oder gar pulvrigen Zustand übergehen. Diese Gefahr droht insbesondere dann, wenn die Klebstoffe zum Verkleben von Bodenbelägen auf einer Fußbodenheizung verwendet werden.

Aufgabe der vorliegenden Erfindung ist es daher, feuchtigkeitshärtende Zusammensetzungen auf Basis silanfunktioneller Prepolymere, insbesondere silanterminierter Prepolymere, zur Verfügung zu stellen, welche die Nachteile des Stand der Technik überwinden und Alterungsschutzmittel für Klebstoff-, Dichtstoff und Beschichtungsformulierungen auf Basis silanfunktioneller Prepolymere, insbesondere silanterminierter Prepolymere, bereit zu stellen, deren Verwendung in denselben die Alterungsbeständigkeit der Zusammensetzung im ausgehärteten Zustand verbessert.

Erfindungsgemäß gelöst wird diese Aufgabe durch eine Zusammensetzung auf Basis silanfunktioneller Prepolymere, insbesondere silanterminierter Prepolymere, enthaltend aminische Alterungsschutzmittel.

Gegenstand der vorliegenden Erfindung sind daher Zusammensetzungen, insbesondere zum Kleben, Abdichten oder Beschichten, enthaltend oder bestehend aus
A) mindestens ein/einem silanfunktionelles/en Prepolymer mit mindestens einer Alkoxysilangruppe,
B) mindestens eine/einer aminofunktionelle/n Verbindung, die als Alterungsschutzmittel wirkt, wobei Verbindungen vom Typ der Oxalanilide bzw. Verbindungen, die 2,2,6,6 Tetramethylpiperidinyl-Gruppen aufweisen, von Komponente B ausgenommen sind,
C) gegebenenfalls eine/einer Katalysatorkomponente, und
D) gegebenenfalls Zusatzstoffe/n und/oder Hilfsstoffe/n, ausgenommen Alterungsschutzmittel, die unter die Definition der Komponente B fallen.

Allgemein versteht man unter einem Alterungsschutzmittel chemische Substanzen, die anderen Stoffen oder Stoffgemischen zugesetzt werden, um letztere vor unerwünschten Alterungsvorgängen zu schützen oder die Alterung zu verzögern. "Alterung" ist eine Änderung der physikalischen und chemischen Eigenschaften eines Stoffes nach längerem Lagern oder bei Gebrauch.

Wie in dieser Anmeldung verwendet, soll der Begriff "aliphatisch" für gegebenenfalls substituierte, lineare oder verzweigte, Alkyl-, Alkenyl- und Alkinylgruppen stehen, in denen nicht benachbarte Methylengruppen (-CH₂-) durch Heteroatome, wie insbesondere Sauerstoff und Schwefel, oder durch sekundäre Aminogruppen ersetzt sein können.

Wie in dieser Anmeldung verwendet, soll der Begriff "alizyklisch" oder "cycloaliphatisch" für, gegebenenfalls substitutierte, carbozyklische oder heterozyklische Verbindungen stehen, die nicht zu den aromatischen Verbindungen gehören, wie beispielsweise Zykloalkane, Zykloalkene oder Oxa-, Thia-, Aza- oder Thiazazykloalkane. Spezielle Beispiele hierfür sind Cyclohexylgruppen, Cyclopentylgruppen, sowie deren durch ein oder zwei N- oder O-Atome unterbrochene Derivate wie z.B. Pyrimidin, Pyrazin, Tetrahydropyran oder Tetrahydrofuran. Weitere Beispiele für alizyklische Gruppen sind Polyisocyanate mit Ringstrukturen wie z.B. Iminooxadiazindion-, Oxadiazintrion, Oxazolidinon-, Allophanat-, zyklischen Isocyanurat-, zyklischen Uretdion-, zyklischen Urethan-, zyklischen Biuret-, zyklischen Harnstoff-, Acylharnstoff- und/oder Carbodiimid-Strukturen.

Wie in dieser Anmeldung verwendet, soll der Begriff "gegebenenfalls substituiert" bzw. "substituiert" insbesondere für eine Substitution der relevanten Struktureinheit durch -F, -Cl, -I, -Br, -OH, -OCH₃, -OCH₂CH₃, -O-Isopropyl oder -O-nPropyl, -OCF₃, -CF₃, -S-, C₁₋₆-Alkyl und/oder eine andere, ggf. über ein Heteroatom verknüpfte lineare oder verzweigte, aliphatische und/oder alizyklische Struktureinheit mit 1 bis 12 Kohlenstoffatomen stehen. Vorzugsweise steht er für eine Substitution durch Halogen (insbesondere -F, -Cl), C₁₋₆-Alkoxy (insbesondere Methoxy und Ethoxy), Hydroxy, Trifluormethyl und Trifluormethoxy.

Wie in dieser Anmeldung verwendet, soll der Begriff "niedermolekular" für Verbindungen stehen, deren Molekülmasse bis zu 800 g/mol beträgt.

Wie in dieser Anmeldung verwendet, soll der Begriff "hochmolekular" für Verbindungen stehen, deren Molekülmasse 800 g/mol übersteigt.

Wie in dieser Anmeldung verwendet, soll der Begriff "Polyisocyanat" für aliphatische, aromatische oder cycloaliphatische Polyisocyanate einer NCO-Funktionalität von > 1, bevorzugt ≥ 2 stehen, inbesondere Di- und Triisocyanate.

Wie in dieser Anmeldung verwendet, soll der Begriff "Monomer" für eine niedermolekulare Verbindung mit funktionellen Gruppen stehen, die am Aufbau von Polymeren beteiligt ist und eine definierte Molmasse besitzt.

Wie in dieser Anmeldung verwendet, soll der Begriff "Polymer" für Verbindungen stehen, in denen Monomere gleicher oder verschiedener Art wiederholt miteinander verknüpft sind und die sich hinsichtlich Polymerisationsgrad, Molmassenverteilung bzw. Kettenlänge unterscheiden können. Ein Polymer gemäß vorliegender Erfindung ist folglich eine Verbindung, welche in ihrer Molekülstruktur mindestens eine sich mindestens einmal wiederholende Struktureinheit aufweist, die während der Polymersynthese durch Beteiligung eines Monomers kovalent in die Molekülstruktur eingefügt wurde.

Wie in dieser Anmeldung verwendet, soll der Begriff "Prepolymer" für ein Polymer mit funktionellen Gruppen stehen. Analog zur Polymerdefinition sind zur Ausbildung der Molekülstruktur des Prepolymers mindestens zwei Monomere gleicher oder verschiedener Art wiederholt miteinander verknüpft. Das Prepolymer ist am Endaufbau von Polymeren beteiligt, die ein größeres Molekulargewicht als das Prepolymer besitzen. Der Prepolymer-Begriff umfasst somit polymere Verbindungen, die jeweils über mindestens eine im Molekül enthaltene funktionelle Gruppe reaktiv sind und unter Ausbildung einer Wiederholungseinheit zu einem (bevorzugt vernetzten) Polymer reagieren können. "Alkoxysilan-funktionalisierte Prepolymere" enthalten (gegebenenfalls neben anderen funktionellen Gruppen) mindestens eine Alkoxysilan-Gruppe als funktionelle Gruppe. Vom Begriff "Alkoxysilan-funktionalisierte Prepolymere sind sowohl "Alkoxysilan-funktionalisierte Polyurethanprepolymere" und "Alkoxysilan-funktionalisierte polymere Polyisocyanate" mit umfasst, als auch die eingangs erwähnten Alkoxysilangruppen-haltigen Polymere gemäß den Offenlegungsschriften EP 2093244, DE 102010038768, DE 102010038774 und DE102011006313, und Alkoxysilan-haltige Polymere gemäß den Druckschriften WO 00/55229, WO 03/078486, US 5162426 und US 5886125.

Der Begriff "blockiert" bedeutet im Rahmen dieser Anmeldung "reversibel blockiert". So kann beispielsweise aus einer blockierten Isocyanatgruppe durch Erwärmung wieder Isocyanat freigesetzt werden; blockierte Isocyanatgruppen sind also nach wie vor reaktiv mit Polyolen. Typischerweise versteht man unter einem blockierten Isocyanat eine Additionsverbindung eines hochreaktiven Isocyanats mit einem Alkohol (zu einem Urethan) oder einem Amin (zu einem Harnstoff), die bei höheren Temperaturen wieder in Alkohol bzw. Amin und in Isocyanat zerfällt. Bekannte Blockierungsmittel sind z.B. Acetessigsäure, Malonester, 3,5-Dimethylpyrazol, Butanonoxim, sekundäre Amine, Caprolactam oder verschiedene Alkohole.

Soweit sich aus dem Kontext nichts anderes ergibt, umfasst in dieser Anmeldung der Begriff "Isocyanatgruppe" immer sowohl freie Isocyanatgruppen (-NCO) als auch blockierte Isocyanatgruppen.

Bevorzugte silanfunktionelle Prepolymere mit mindestens einer Alkoxysilangruppe weisen ein zahlenmittleres Molekulargewicht Mn von höchstens 30000 g/mol, bevorzugt höchstens 20000 g/mol, besonders bevorzugt höchstens 15000 g/mol, auf.

Bevorzugte silanfunktionelle Prepolymere mit mindestens einer Alkoxysilangruppe weisen ein zahlenmittleres Molekulargewicht Mn von mindestens 500 g/mol, bevorzugt mindestens 800 g/mol, besonders bevorzugt mindestens 1000 g/mol auf.

Unter Molekülmasse ist bei Verbindungen, deren Molekülmasse sich nicht aus einer exakt definierten Strukturformel ergibt, wie z.B. bei Polymeren, jeweils das Molekulargewichtszahlenmittel zu verstehen. Das zahlenmittlere Molekulargewicht Mn wird bestimmt durch Gelpermeationschromatographie (GPC) in Tetrahydrofuran bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8x300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der am Anmeldetag dieser Patentanmeldung gültigen DIN 55672 Teil 1 festgelegt.

Die erfindungsgemäße Zusammensetzung enthält bevorzugt mindestens ein silanfunktionelles Prepolymer, enthaltend mindestens eine Alkoxysilangruppe (bevorzugt mindestens zwei Alkoxysilan gruppen) der allgemeinen Formel (I)

*-R³-Si(R¹)₃₋ₐ(OR²)ₐ (I)

wobei
R¹ für eine Alkylgruppe mit 1 bis 8 C-Atomen steht;
R² für eine Alkylgruppe mit 1 bis 12 C-Atomen steht;
R³ für eine lineare oder verzweigte, gegebenenfalls cyclische, Alkylengruppe mit 1 bis 18 C-Atomen, gegebenenfalls mit aromatischen Anteilen, und gegebenenfalls mit einem oder mehreren Heteroatomen, steht; und
a für einen Wert von 1 oder 2 oder 3 steht.
* steht in Formel (I) für eine freie Valenz des damit gekennzeichneten Restes/Strukturfragments, an die das Prepolymer bindet.

Es ist erfindungsgemäß bevorzugt, wenn R1 der Formel (I) für eine Methylgruppe oder eine Ethylgruppe, besonders bevorzugt für eine Methylgruppe, steht.

Es ist erfindungsgemäß bevorzugt, wenn R2 der Formel (I) für jeden Rest -OR² der Formel (I) unabhängig für eine Methylgruppe oder eine Ethylgruppe steht. In diesem Falle sind die Alkoxyreste der Alkoxysilangruppe des silanfunktionellen Prepolymers ausgewählt aus Ethoxy- und/oder Methoxygruppen.

Es ist erfindungsgemäß bevorzugt, wenn R3 der Formel (I) für eine Alkylengruppe mit 1 bis 6 Kohlenstoffatomen, insbesondere für eine Methylen-Gruppe (-CH₂-), eine 1,3-Propylen-Gruppe, eine 1 ,4-Butylen-Gruppe oder eine 3,3-Dimethyl-1 ,4-butylen-Gruppe steht.

Es ist erfindungsgemäß bevorzugt, wenn a für 2 oder 3, insbesondere für 3 steht.

Es ist erfindungsgemäß bevorzugt, dass mindestens an den Termini des silanfunktionellen Prepolymers jeweils eine Alkoxysilangruppe bindet. Zusätzlich oder anstelle der Bindung der Alkoxysilan-gruppe an den Termini können weitere Alkoxysilangruppen über das Polymerrückgrat verteilt an das Prepolymer gebunden sein.

Als silanfunktionalisierte Prepolymere eignen sich Polyurethane mit mindestens einer Alkoxysilangruppe, polymere Polyisocyanate mit mindestens einer Alkoxysilangruppe, polymere Polyole mit mindestens einer Alkoxysilangruppe, Polyetherpolyole mit mindestens einer Alkoxysilangruppe, Polyesterpolyole mit mindestens einer Alkoxysilangruppe, Polycarbonatpolyole mit mindestens einer Alkoxysilangruppe, Polyacrylatpolyole mit mindestens einer Alkoxysilangruppe, Polymethacrylatpolyole mit mindestens einer Alkoxysilangruppe sowie Polyurethanpolyole mit mindestens einer Alkoxysilangruppe.

In einer ersten Ausführungsform ist das silanfunktionelle Prepolymer ein silanfunktionelles Polyurethanprepolymer, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist (letzteres im Folgenden auch: isocyanatfunktionelles Prepolymer). Dieses Polyurethanprepolymer wird hergestellt durch die Umsetzung einer Verbindung mit isocyanatreaktiven Gruppen oder Mischungen solcher Materialien und Polyisocyanaten, wobei die Isocyanatgruppen gegenüber den isocyanatreaktiven Gruppen im Überschuss eingesetzt werden.

Einsetzbare polymere Polyole zur Herstellung der Prepolymere weisen ein zahlenmittleres Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,7 bis 5 und besonders bevorzugt von 2,0 bis 5 auf.

Polyole zur Herstellung der Prepolymere sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole Polyacrylatpolyole oder Polycarbonatpolyole, besonders bevorzugt sind Polyetherpolyole, Polyestherpolyole und Polycarbonatpolyole.

Als Polyetherpolyole seien z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mₙ von 106 bis 4000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente sind Polypropylenoxidpolyole, Polyethylenoxidpolyole und Polytetramethylenoxidpolyole.

Gut geeignete Beispiele für Polyesterpolyole sind die an sind die bekannten Polykondensate aus Disowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure, verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. □-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Anstelle der oben beschriebenen polymeren Polyether-, Polyester- oder Polycarbonatpolyolen kann man auch niedermolekulare Polyole im Molgewichtsbereich von 62 - 400 g/mol für die Herstellung der isocyanathaltigen Prepolymere verwenden. Geeignete niedermolekulare Polyole sind kurzkettige, d.h. 2 bis 20 Kohlenstoffatome enthaltende, aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 2,2,4-Trimethyl-1,3-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxy-propylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die genannten Polyole können alleine oder in Mischung verwendet werden.

Die vorstehend erwähnten isocyanatreaktiven Verbindungen können mit allen Diisocyanaten, aromatischen als auch aliphatischen vor der eigentlichen Prepolymerisierung zu Urethan modifizierten Hydroxylverbindungen umgesetzt werden.

Als Isocyanat-haltige Komponente kommen aromatische, aliphatische und cycloaliphatische Diisocyanate sowie Gemische davon in Betracht. Geeignete Diisocyanate sind Verbindungen der Formel PIC(NCO)₂ mit einem mittleren Molekulargewicht unter 400 g/mol, worin PIC einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe Butandiisocyanat, 1,5-Pentandiisocyanat (PDI), 1,6-Hexandiisocyanat (Hexamethylendiisocyanat, HDI), 4-Isocyanatomethyl-1,8-octandiisocyanat (Triisocyanatononan, TIN) 4,4'-Methylen-bis(cyclohexylisocyanat), 3,5,5-Trimethyl-1-isocyanato-3-isocyanatomethylcyclohexan (Isophorondiisocyanat, IPDI), 2,4- und/oder 2,6-Methylcyclohexyldiisocyanat (H₆TDI) sowie ω,ω'-Diisocyanato-1,3-dimethylcyclohexan (H₆XDI), Xylylendiisocyanat (XDI), 4,4'-Diisocyanatodicyclohexylmethan, Tetramethylendiisocyanat, 2-Methyl-pentamethylendiisocyanat, 2,2,4-Trimethylhexamethylendiisocyanat (THDI), Dodecamethylendiisocyanat, 1,4-Diisocyanatocyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und 1,3-bis(2-isocyanatopropan-2-yl)benzol und 1,4-bis(2-isocyanatopropan-2-yl)benzol (m- und p-Tetramethylxylylen, TMXDI), 2,4-/2,6-Toluoldiisocyanat (TDI), Methylendiphenyldiisocyanat (MDI), Naphtyldiisocyanat (NDI). Bevorzugt werden hier IPDI, HDI, PDI oder TDI bzw. MDI-Derivate verwendet.

Mit eingeschlossen ist selbstverständlich auch die Verwendung, bzw. Mitverwendung der nachstehend erwähnten polymeren Polyisocyanate, ebenso beispielsweise in Form ihrer Derivate wie Urethane, Biurete, Allophanate, Uretdione, Isocyanurate und Trimerisate und Mischformen dieser Derivatisierungen.

Grundsätzlich können auch Mischungen von mehreren Isocyanaten eingesetzt werden, bevorzugt ist jedoch die Verwendung nur eines Isocyanats.

Für die Synthese eines isocyanatfunktionellen Prepolymers wird ein Überschuss an der Polyisocyanatkomponente, und zwar vorzugsweise ein NCO : Y-H-Verhältnis (Y = O, N oder S) von 1,3 : 1,0 bis 5,0 : 1,0, besonders bevorzugt von 1,5 : 1,0 bis 3,0 : 1,0 und ganz besonders bevorzugt von 1,5 : 1,0 bis 2,5 : 1,0 gewählt.

Diese Urethanisierung kann durch Katalyse beschleunigt werden. Zur Beschleunigung der NCO-OH-Reaktion kommen dem Fachmann an sich bekannte Urethanisierungskatalysatoren wie beispielsweise Organozinnverbindungen, Bismuthverbindungen, Zinkverbindungen, Titanverbindungen, Zirkoniumverbindungen oder aminische Katalysatoren in Frage.

Im Herstellungsverfahren wird diese Katalysatorkomponente, sofern mitverwendet, in Mengen von 0,001 Gew.-% bis 5,0 Gew.-%, bevorzugt 0,001 Gew.-% bis 0,1 Gew.-% und besonders bevorzugt 0,005 Gew.-% bis 0,05 Gew.-% bezogen auf den Festgehalt des Verfahrensprodukts eingesetzt.

Die Urethanisierungsreaktion wird bei Temperaturen von 20 °C bis 200 °C, bevorzugt 40 °C bis 140 °C und besonders bevorzugt von 60 °C bis 120 °C durchgeführt.

Die Reaktion wird fortgeführt, bis ein (bevorzugt vollständiger) Umsatz der isocyanatreaktiven Gruppen erreicht ist. Der Verlauf der Reaktion wird sinnvollerweise durch die Überprüfung des NCO-Gehaltes überwacht und ist beendet, wenn der entsprechende theoretische NCO-Gehalt erreicht und konstant ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das Verfahren kontinuierlich z.B. in einem Statik-Mischer, Extruder oder Kneter oder diskontinuierlich z.B. in einem Rührreaktor durchgeführt wird.

Bevorzugt wird das Verfahren in einem Rührreaktor durchgeführt.

Falls der Umsatz an Polyisocyanat nicht vollständig war, kann unreagiertes Polyisocyanat durch kontinuierliche Destillation vom Prepolymer entfernt werden. Unter einem kontinuierlichem Destillationsverfahren wird hier ein Verfahren verstanden, bei dem nur eine jeweilige Teilmenge des Prepolymers aus dem zuvor beschriebenen Verfahrensschritt kurzzeitig einer erhöhten Temperatur ausgesetzt wird, während die noch nicht im Destillationsprozess befindliche Menge bei einer deutlich niedrigeren Temperatur verbleibt. Als erhöhte Temperatur ist dabei die zur Verdampfung der flüchtigen Bestandteile bei einem entsprechend gewählten Druck notwendige Temperatur zu verstehen.

Bevorzugt wird die Destillation bei einer Temperatur von weniger als 170°C, besonders bevorzugt 110 bis 170°C, ganz besonders bevorzugt 125 bis 145°C und bei Drücken von weniger als 20 mbar, besonders bevorzugt weniger als 10 mbar, ganz besonders bevorzugt bei 0,05 bis 5 mbar durchgeführt.

Bevorzugt beträgt die Temperatur der noch nicht im Destillationsprozess befindlichen Menge der prepolymerhaltigen Reaktionsmischung 0° bis 60°C, besonders bevorzugt 15° bis 40°C und ganz besonders bevorzugt 20° bis 40°C.

Vorzugsweise beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15° bis 40°C.

Bevorzugt wird die Destillation mit solch einer Geschwindigkeit geführt, dass ein Volumeninkrement der zu destillierenden prepolymerhaltigen Reaktionsmischung weniger als 10 min, besonders bevorzugt weniger als 5 min der Destillationstemperatur ausgesetzt wird und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15° bis 40°C höher ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1, 5. Auflage, Seiten 333-334).

Bevorzugt wird als kontinuierliche Destillationstechnik die Dünnschichtdestillation mit den vorstehend genannten Parametern eingesetzt.

Eine weitere Möglichkeit bietet die Bereitstellung eines silanfunktionalisierten, polymeren Polyisocyanats mit mindestens einer Alkoxysilangruppe als ein im Rahmen der zweiten Ausführungsform erfindungsgemäß bevorzugtes silanfunktionelles Prepolymer. Besagte silanfunktionalisierten, polymeren Polyisocyanate können durch die direkte Umsetzung von polymeren Polyisocyanaten mit Alkoxysilanen, die eine isocyanatreaktive Gruppe wie Amino, Mercapto oder Hydroxy tragen, synthetisiert werden. Als geeignete polymere Polyisocyanate finden aromatische, araliphatische, aliphatische oder cycloaliphatische polymere Polyisocyanate mit einer NCO-Funktionalität ≥ 2 Verwendung. Diese können auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen.

Geeignete Diisocyanate zur Herstellung der polymeren Polyisocyanate sind beliebige durch Phosgenierung oder nach phosgenfreien Verfahren, beispielsweise durch thermische Urethanspaltung, zugängliche Diisocyanate, deren Isocyanatgruppen über gegebenenfalls verzweigte aliphatische Reste an einem gegebenenfalls weiter substituierten Aromaten gebunden vorliegen, wie bevorzugt 1,4-Butandiisocyanat, 1,5-Pentandiisocyanat (PDI), 1,6-Hexandiisocyanat (Hexamethylendiisocyanat, HDI), 4-Isocyanatomethyl-1,8-octandiisocyanat (Triisocyanatononan, TIN) 4,4'-Methylen-bis(cyclohexylisocyanat), 3,5,5-Trimethyl-1-isocyanato-3-isocyanatomethylcyclohexan (Isophorondiisocyanat, IPDI), 2,4- und/oder 2,6-Methylcyclohexyldiisocyanat (H₆TDI) sowie ω,ω'-Diiso-cyanato-1,3-dimethylcyclohexan (H₆XDI), 4,4'-Diisocyanatodicyclohexylmethan, Tetramethylendiisocyanat, 2-Methyl-pentamethylendiisocyanat, 2,2,4-Trimethylhexamethylendiisocyanat (THDI), Dodecamethylendiisocyanat, 1,4-Diisocyanatocyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan, 2,4- Toluoldiisocyanat, 2,6-Toluoldiisocyanat, Methylendiphenyldiisocyanat (MDI), Naphtyldiisocyanat (NDI), 1,3-Bis(isocyanatomethyl)benzol (m-Xylylendiisocyanat, m-XDI), 1,4-Bis(isocyanatomethyl)benzol (p-Xylylendiisocyanat, p-XDI), 1,3-Bis(2-isocyanato-propan-2-yl)benzol (m-Tetramethylxylylendiisocyanat, m-TMXDI), 1,4-Bis(2-isocyanatopropan-2-yl)benzol (p-Tetramethylxylylendiisocyanat, p-TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis-(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol, 1,4-Bis(isocyanatomethyl)naphthalin sowie beliebige Mischungen dieser Diisocyanate. Ganz besonders bevorzugt eignen sich zur Darstellung der besagten silanfunktionellen polymeren Polyisocyanate Dimere aus den vorgenannten Diisocyanaten, Trimere aus den vorgenannten Diisocyanaten oder Kombinationen daraus als erfindungsgemäßes polymeres Polyisocyanat.

Die Herstellung der polymeren Polyisocyanatkomponenten aus den vorgenannten Diisocyanaten erfolgt mit Hilfe an sich bekannter Modifizierungsreaktionen durch Umsetzung eines Teils der ursprünglich im Ausgangsdiisocyanat vorhandenen Isocyanatgruppen unter Bildung von polymeren Polyisocyanatmolekülen, die aus mindestens zwei Disocyanatmolekülen bestehen.

Geeignete derartige Modifizierungsreaktionen sind beispielsweise die üblichen Verfahren zur katalytischen Oligomerisierung von Isocyanaten unter Bildung von Uretdion-, Isocyanurat-, Iminooxadiazindion- und/oder Oxadiazintrionstrukturen oder zur Biuretisierung von Diisocyanaten, wie sie z. B. *in* Laas et al., J. Prakt. Chem. 336, 1994, 185-200*,* in DE-A 1 670 666 und EP-A 0 798 299 beispielhaft beschrieben sind.

Isocyanatreaktive Alkoxysilanverbindungen zur Herstellung erfindungsgemäßer silanfunktionalisierter Prepolymere (insbesondere silanfunktionalisierter Prepolymere der ersten und zweiten Ausführungsform) sind dem Fachmann hinlänglich bekannt. Beispielhaft genannt seien Aminopropyltrimethoxysilan, Mercaptopropyltrimethoxysilan, Mercaptopropyltriethoxysilan, Aminopropylmethyldimethoxysilan, Mercaptopropylmethyldimethoxysilan, Aminopropyltriethoxysilan, Mercaptopropyltriethoxysilan, Aminopropylmethyldiethoxysilan, Mercaptopropylmethyldiethoxysilan, Aminomethyltrimethoxysilan, Aminomethyl-triethoxysilan, (Aminomethyl)methyldimethoxysilan, (Aminomethyl)methyldiethoxysilan, *N*-Butylaminopropyltrimethoxysilan, *N*-Butylaminopropyltriethoxysilan, *N*-Ethylaminopropyltrimethoxysilan *N-*Ethylaminopropyltriethoxysilan, *N*-Phenylaminopropyltrimethoxysilan, N-Phenylaminopropyltriethoxysilan, N,N-Bis-(3-trimethoxysilylpropyl)-amin, N,N-Bis(3-triethoxysilylpropyl)-amin, N,N-Bis-(3-tri-i-propoxysilylpropyl)-amin.

Des Weiteren können als isocyanatreaktive Alkoxysilanverbindungen auch die Asparaginsäureester verwendet werden, wie sie in der EP-A 0 596 360 beschrieben werden. Bei diesen Molekülen der allgemeinen Formel III 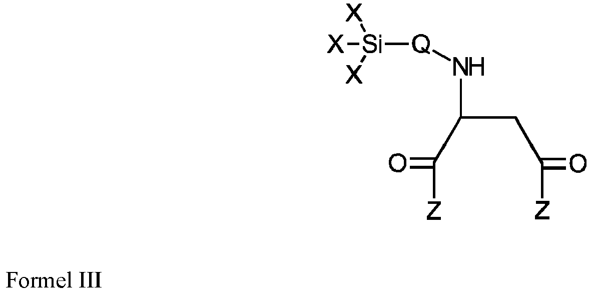 bedeutet X gleiche oder verschiedene Alkoxy- oder Alkylreste, die auch verbrückt sein können, wobei aber an jedem Si-Atom mindestens ein Alkoxyrest vorhanden sein muss, Q ist ein difunktioneller linearer oder verzweigter aliphatischer Rest und Z steht für einen Alkoxyrest mit 1 bis 10 Kohlenstoffatomen. Die Verwendung von solchen Asparaginsäureestern ist bevorzugt. Beispiele für besonders bevorzugte Asparaginsäureester sind *N*-(3-Triethoxysilyl-propyl)asparaginsäurediethylester, *N*-(3-Trimethoxysilylpropyl)-asparaginsäurediethylester und *N-*(3-Dimethoxymethylsilylpropyl)-asparaginsäurediethylester.

Die erfindungsgemäß eingesetzten Alkoxysilylgruppen-haltigen Prepolymere werden unter Einsatz isocyanatreaktiver Alkoxysilanverbindung hergestellt, indem isocyanatfunktionelles Prepolymer (bevorzugt solches der ersten Ausführungsform (isocyanatfunktionelles Polyurethan) oder der zweiten Ausführungsform (polymere Polyisocyanate)) durch Reaktion mit einer isocyanatreaktiven Alkoxysilanverbindung zum silanterminierten Prepolymer umgesetzt wird. Besagte Umsetzung mit isocyanatreaktiven Alkoxysilanen erfolgt innerhalb eines Temperaturbereiches von 0 °C bis 150 °C, vorzugsweise von 20 °C bis 120 °C, wobei die Mengenverhältnisse in der Regel so gewählt werden, dass pro Mol eingesetzter NCO-Gruppen 0,8 bis 1,3 Mol der isocyanatreaktiven Alkoxysilanverbindung eingesetzt werden, vorzugsweise 1,0 Mol isocyanatreaktive Alkoxysilanverbindung pro Mol eingesetzter NCO-Gruppen.

In einer dritten Ausführungsform ist das silanfunktionelle Prepolymer ein silanfunktionelles Prepolymer, erhältlich durch die Umsetzung eines Isocyanatosilans mit einem Polymer, welches gegenüber Isocyanatgruppen reaktive funktionelle Endgruppen, insbesondere Hydroxylgruppen, Mercaptogruppen und/oder Aminogruppen, aufweist.

Bevorzugte Polymere, die gegenüber Isocyanatgruppen reaktive funktionelle Endgruppen enthalten, sind die oben genannten polymeren Polyole, ganz besonders Polyether-, Polyester-, Polycarbonat- und Polyacrylatpolyole sowie Polyurethanpolyole, hergestellt aus Polyisocyanaten und den genannten Polyolen. Es können auch Mischungen aller genannten Polyole verwendet werden. Isocyanatfunktionelle Alkoxysilanverbindungen sind grundsätzlich alle alkoxysilangruppenhaltigen Monoisocyanate mit einem Molekulargewicht von 140 g/mol bis 500 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyl-dimethoxysilan, 3-Isocyanatopropyltriethoxysilan und 3-Isocyanatopropylmethyl-diethoxysilan. Bevorzugt ist hier die Verwendung von 3-Isocyanatopropyltrimethoxysilan oder 3-Isocyanatopropyltriethoxysilan, ganz besonders bevorzugt ist die Verwendung von 3-Isocyanatopropyltriethoxysilan.

Es ist erfindungsgemäß auch möglich, isocyanatfunktionelle Silane zu verwenden, die durch Umsetzung eines Diisocyanates mit einem Amino- oder Thiosilan hergestellt wurden, wie sie in der US-A 4,146,585 oder der EP-A 1 136 495 beschrieben werden.

Die Umsetzung der Isocyanatosilane mit den vorzugsweise eingesetzten Polyolen erfolgt in derselben Weise, wie oben für die Herstellung des Isocyanat-haltigen Prepolymers aus der Polyisocyanatkomponente mit der Polyolkomponente beschrieben.

Das Verhältnis der NCO-Gruppen des Isocyanatosilans zu den Isocyanat-reaktiven Gruppen, vorzugsweise den Hydroxylgruppen der Polyole, beträgt zwischen 0,5 : 1 und 1 : 1, vorzugsweise zwischen 0.75 : 1 und 1: 1, ganz besonders bevorzugt zwischen 0,9 : 1 und 1 : 1.

In einer vierten Ausführungsform ist das silanfunktionelle Prepolymer ein silanfunktionelles Prepolymer, welches erhältlich ist durch eine Hydrosilylierungsreaktion von Polymeren mit endständigen Doppelbindungen, beispielsweise Poly(meth)acrylatpolymere und Polyetherpolymere, insbesondere von allylterminierten Polyoxyalkylenpolymeren, beschrieben beispielsweise in US 3,971,751 und US 6,207,766.

Darüber hinaus können auch solche Alkoxysilan-haltigen Prepolymere erfindungsgemäß eingesetzt werden, die in den in der Einleitung dieser Patentanmeldung zitierten Offenlegungsschriften beschrieben werden.

Geeignete kommerziell erhältliche silanfunktionelle Prepolymere, die unter die vorangegangene Beschreibung fallen, sind insbesondere Produkte unter den Handelsnamen MS Polymer^{™} (von Kaneka Corp.; insbesondere die Typen S203H, S303H, S227, S810, MA903 oder S943); MS Polymer^{™} bzw. Silyl^{™} (von Kaneka Corp.; insbesondere die Typen SAT010, SAT030, SAT200, SAX350, SAX400, SAX725, MAX450, MAX602 oder MAX951); Excestar^{®} (von Asahi Glass Co. Ltd.; insbesondere die Typen S2410, S2420, S3430 oder S3630); SPUR+^{®} (von Momentive Performance Materials; insbesondere die Typen 101 OLM, 1015LM oder 1050MM); Vorasil^{™} (von Dow Chemical Co.; insbesondere die Typen 602 oder 604); Desmoseal^{®} (von Covestro Deutschland AG; insbesondere die Typen S XP 2458, XP 2636, S XP 2749, S XP 2774 oder S XP 2821); TEGOPAC^{®} (von Evonik Industries AG; insbesondere die Typen Seal 100, Bond 150 oder Bond 250); oder Geniosil^{®} STP (von Wacker Chemie AG; insbesondere die Typen E15 oder E35, E10 und E-30).

Bevorzugt enthält die erfindungsgemäße Zusammensetzung Komponente A in einer Menge von 5 bis 95 Gew.-%, besonders bevorzugt von 10 bis 80 Gew.-%, ganz besonders bevorzugt von 10 bis 50 Gew.-%, jeweils bezogen auf das Gesamtgewicht der Zusammensetzung.

Weiterhin umfasst die erfindungsgemäße Zusammensetzung mindestens eine aminofunktionelle Verbindung, die als Alterungsschutzmittel wirkt (Komponente B), wobei Verbindungen vom Typ der Oxalanilide bzw. Verbindungen, die 2,2,6,6 Tetramethylpiperidinyl-Gruppen aufweisen, von Komponente B ausgenommen sind.

Bevorzugt handelt es sich um aminofunktionelle Verbindungen, die wenigstens eine sekundäre Aminogruppe aufweisen, bei der wenigstens einer der Reste ein gegebenenfalls mit Alkyl-, Aralkyl-, sekundären Amino- (-N(H)-Alkyl) oder tertiären Aminogruppen (-N(Alkyl¹)-Alkyl²) substituierter Arylrest, bevorzugt ein gegebenenfalls mit Alkyl-, Aralkyl-, sekundären Amino- (-N(H)-Alkyl) oder tertiären Aminogruppen (-N(Alkyl¹)-Alkyl²) substituierter Phenylrest ist; wobei Verbindungen der oben genannten Art von Komponente B ausgenommen sind.

Dazu gehören beispielsweise die aminofunktionellen Verbindungen der folgenden allgemeinen Formeln IV bis VI: 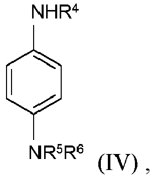 wobei R⁴ für einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen steht, und R⁵ und R⁶ für gleiche oder verschiedene Reste stehen und Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, und wobei R⁵ bevorzugt für Wasserstoff steht. 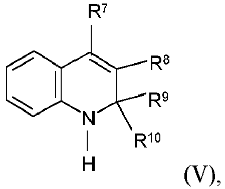 wobei die Reste R⁷ bis R¹⁰ für gleiche oder verschiedene Reste stehen und Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten und bevorzugt für gleiche oder verschiedene Reste stehen und Wasserstoff oder einen gesättigten oder ungesättigten, linearen oder verzweigten, aliphatischen Rest mit bis zu 6 Kohlenstoffatomen bedeuten. 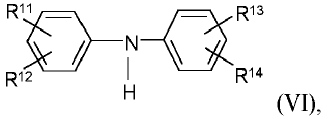 wobei die Reste R¹¹ bis R¹⁴ für gleiche oder verschiedene Reste stehen und Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten oder die Reste R¹¹ und R¹² und/oder die Reste R¹³ und R¹⁴ jeweils in ortho-Stellung zueinander an den bzw. die Aromaten gebunden sind und zusammen einen aromatischen, gegebenenfalls substituierten Ring bilden. Bevorzugt steht wenigstens einer der Reste R¹¹ bzw. R¹³, besonders bevorzugt stehen beide Reste R¹¹ bzw. R¹³ für Wasserstoff, und stehen die jeweils übrigen Reste unabhängig voneinander für einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen.

Zu den Verbindungen der allgemeine Formeln IV bis VI gehören beispielsweise: 2,2,4-Trimethyl-1,2-dihydroquinolin (TMQ), N,N'-Bis-(1,4-dimethylpentyl)-p-phenylenediamin, N-Isopropyl-N'-phenyl-p-phenylendiamin, N-(1,3-dimethylbutyl)-N'-phenyl-p-phenylen-diamin, N-Phenyl-1-naphthylamin, N-Phenyl-1-naphthylamin, Bis(4-octylphenyl)amin (auch octyliertes Diphenylamin) und styrolisiertes Diphenylamin.

Besonders bevorzugt ist die mindestens eine aminofunktionelle Verbindung ausgewählt aus Verbindungen der allgemeinen Formeln IV und V.

Noch mehr bevorzugt ist die mindestens eine aminofunktionelle Verbindung ausgewählt aus 2,2,4-Trimethyl-1,2-dihydroquinolin (TMQ), *N,N'*-Bis-(1,4-dimethylpentyl)-*p*-phenylenediamin, N-Isopropyl-N'-phenyl-p-phenylendiamin, und N-(1,3-dimethylbutyl)-N'-phenyl-p-phenylen-diamin.

Am meisten bevorzugt ist die mindestens eine aminofunktionelle Verbindung ausgewählt aus 2,2,4-Trimethyl-1,2-dihydroquinolin (TMQ), und N-(1,3-dimethylbutyl)-N'-phenyl-p-phenylen-diamin.

Bevorzugt enthält die erfindungsgemäße Zusammensetzung Komponente B in einer Menge von 0,01 bis 2 Gew.-%, besonders bevorzugt von 0,1 bis 1 Gew.-%, noch mehr bevorzugt 0,1 bis 0,5 Gew.-%, jeweils bezogen auf das Gesamtgewicht der Zusammensetzung.

Komponente B kann als Einzelkomponente der Formulierung zugesetzt werden. Üblicherweise werden Alterungsschutzmittel, Lichtschutzmittel und UV Stabilisatoren als Paket den meisten Formulierungen auf Basis STP zugesetzt. Darüber hinaus kann Komponente B kann auch dem STP während dessen Herstellung als Stabilisator schon zugegeben werden.

In einer Ausführungsform umfasst die erfindungsgemäße Zusammensetzung zusätzlich mindestens einen Härtungskatalysator (Komponent C). Dieser dient als Katalysator für die Vernetzung der silanfunktionellen Prepolymere und weiterer silangruppenhaltiger Verbindungen.

Als solche Katalysatoren können alle bekannten Verbindungen eingesetzt werden, die die hydrolytische Spaltung der hydrolysierbaren Gruppen der Organosilangruppen und die anschließende Kondensation der Si-OH-Gruppe zu Siloxangruppen katalysieren können.

Geeignete Härtungskatalysatoren sind beispielsweise Titanate, wie Tetrabutyltitanat oder Titantetraacetylacetonat; Bismutverbindungen, wie Bismut-tris-2-ethylhexanoat; Zinncarboxylate, wie Dibutyl- zinndilaurat (DBTL), Dibutylzinndiacetat oder Dibutylzinndiethylhexanoat; Zinnoxide wie Dibutylzinnoxid und Dioctylzinnoxid; Organoaluminumverbindungen wie Aluminum-trisacetylacetonat; Chelatverbindungen wie Zirconum-tetra-acetylacetonat; Aminverbindungen oder ihre Salze mit Carbonsäuren, wie Octylamin, Cyclohexylamin, Benzylamin, Dibutylamin, Monoethanolamin, Triethanolamin, Diethylenetriamin, Triethylenetetramin, Triethylenediamin, 1,8-Diazabicyclo[5.4.0]undec-7-en (DBU), 1,5-Diazabicyclo[4.3.0]non-5-en (DBN), 6-(Dibutylamino)-1,8-diazabicyclo[5.4.0]undec-7-en, N- Methyltriazabicyclodecen, Tetramethylguanidin, 2-Guanidinobenzimidazol, Acetylacetoneguanidin, 1,3-Di-o-tolylguanidin (DTG), 1,3-Diphenylguanidin, o-Tolylbiguanidin, 2-tert-Butyl-1,1,3,3-tetramethylguanidine oder N-(3-Triethoxysilylpropyl)-4,5-dihydroimidazol, N-(3-Trimethoxysilylpropyl)-4,5-dihydroimidazol, Guanidin, Morpholin, N-methylmorpholin.

Besonders bevorzugt werden 1,8-Diazabicyclo[5.4.0]undec-7-en (DBU) und/oder 1,5-Diazabicyclo[4.3.0]non-5-en (DBN) eingesetzt.

Eine Ausführungsform arbeitet Metallkatalysator-frei, eine andere setzt Katalysatoren ein, die keine Schwermetalle wie Sn enthalten.

Sofern unter Verwendung von Katalysatoren gearbeitet wird, umfasst die erfindungsgemäße Zusammensetzung vorzugsweise 0,01 bis 5 Gew.-%, bevorzugt 0,05 bis 2,5 Gew.-%, besonders bevorzugt 0,1 bis 1 Gew.-%, Härtungskatalysator bezogen auf das Gesamtgewicht der Zusammensetzung.

In einer Ausführungsform wird katalysatorfrei gearbeitet. Die Verwendung von Katalysatoren ist jedoch bevorzugt.

Weiterhin umfasst die erfindungsgemäße Zusammensetzung gegebenenfalls Zusatzstoffe und/oder Hilfsstoffe (Komponente D). Dazu gehören:
i) Füllstoffe: Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Magnesiumhydroxid, Kieselsäuren, insbesondere hochdisperse Kieselsäuren aus Pyrolyseprozessen, Russe, insbesondere industriell hergestellter Ruß (Carbon Black), PVC-Pulver oder Hohlkugeln. Bevorzugte Füllstoffe sind Calciumcarbonate, calicinierte Kaoline, Ruß, hochdisperse Kieselsäuren sowie flammhemmende Füllstoffe (vgl. auch v)).
   Die erfindungsgemäße Zusammensetzung umfasst vorzugsweise 2 bis 80 Gew.-%, bevorzugt 40 bis 70 Gew.-%, besonders bevorzugt 50 bis 60 Gew.-%, Füllstoff bezogen auf das Gesamtgewicht der Zusammensetzung.
ii) Weichmacher: Geeignete Weichmacher sind beispielsweise Ester organischer Carbonsäuren oder deren Anhydride, wie Phthalat, beispielsweise Dioctylphthalat, Diisononylphthalat oder Diisodecylphthalat, Adipate, beispielsweise Dioctyladipat, Azelate und Sebacate, Cyclohexandicarbonsäuredialkylester, bei dem die Alkylreste der Estergruppen unabhängig voneinander jeweils 1 bis 20 C-Atome enthalten, Polyole, beispielsweise Polyoxyalkylenpolyole oder Polyesterpolyole, organische Phosphor- und Sulfonsäureester oder Polybutene. Wenn kein anderer Bestandteil Polymere mit Polyethergruppen enthält, so wird vorzugsweise mindestens ein Polymer mit Polyethergruppen als Weichmacher eingesetzt.
   Die erfindungsgemäße Zusammensetzung umfasst vorzugsweise 0 bis 30 Gew.-%, bevorzugt 5 bis 20 Gew.-%, besonders bevorzugt 7,5 bis 15 Gew.-%, Weichmacher bezogen auf das Gesamtgewicht der Zusammensetzung.
iii) Trocknungsmittel: Geeignete Trocknungsmittel sind beispielsweise Vinyltrimethoxysilan, ccfunktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe. Vorzugsweise wird als Trocknungsmittel ein vinylmodfiziertes Organosilan, wie beispielsweise Vinyltrimethoxysilan oder Vinyltriethoxysilan eingesetzt. In einer besonderen Ausführungsform, in der die Zusammensetzung im Wesentlichen als Silangruppen Ethoxysilangruppen enthält, ist Vinyltriethoxysilan bevorzugt.
   Die erfindungsgemäße Zusammensetzung umfasst vorzugsweise 0,1 bis 10 Gew.-%, bevorzugt 0,5 bis 7 Gew.-%, besonders bevorzugt 0,5 bis 5 Gew.-%, am meisten bevorzugt 0,8 bis 3 Gew.-% Trocknungsmittel bezogen auf das Gesamtgewicht der Zusammensetzung.
iv) Haftvermittler und/oder Vernetzer: Dies sind beispielsweise Silane wie insbesondere Aminosilane, wie insbesondere 3-Aminopropyl-trimethoxysilan, 3-Aminopropyldimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'- [3-(trimethoxysilyl)propyl]ethylendiamin oder deren Analoga mit Ethoxy- oder Isopropoxy- anstelle der Methoxygruppen am Silicium, N-Phenyl-, N-Cyclohexyl- oder N-Alkylaminosilane, weiterhin Mercaptosilane, Epoxysilane, (Meth)acrylosilane, Anhydridosilane, Carbamatosilane, Alkylsilane, Vinylsilane oder Iminosilane, oder oligomere Formen dieser Silane, oder Addukte aus primären Aminosilanen mit Epoxysilanen oder (Meth)acrylosilanen oder Anhydridosilanen. Insbesondere geeignet sind 3-Glycidoxypropyltrimethoxysilan, 3- Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrinnethoxysilan, Vinyltrimethoxysilan oder die entsprechenden Silane mit Ethoxygruppen anstelle der Methoxygruppen, oder oligomere Formen dieser Silane.
v)
   - Weitere Stabilisatoren, wie beispielsweise UV-Stabilisatoren, UV-Absorber, HALS-Amine oder phenolische Antioxidantien.
   - Lösemittel.
   - Pigmente, insbesondere Titandioxid oder Eisenoxide.
   - Rheologie-Modifizierer, insbesondere Verdickungsmittel.
   - Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene.
   - Fasern, insbesondere Glasfasern, Kohlefasern, Metallfasern, Keramikfasern oder Kunststofffasern wie Polyamidfasern oder Polyethylenfasern.
   - Farbstoffe.
   - Natürliche Harze, Fette oder Öle wie Kolophonium, Schellack, Leinöl, Rizinusöl oder Sojaöl.
   - Nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene,
   - Ethylenvinylacetat-Copolymere (EVA) oder ataktische Poly-a-Olefine (APAO).
   - Flammhemmende Substanzen, insbesondere die bereits genannten Füllstoffe Aluminiumhydroxid oder Magnesiumhydroxid, oder insbesondere organische Phosphorsäureester wie insbesondere Triethylphosphat, Trikresylphosphat, Triphenylphosphat, Diphenylkresylphosphat, Isodecyldiphenyl- phosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate.
   - Oberflächenaktive Substanzen, insbesondere Netzmittel, Verlaufsmittel, Entlüftungsmittel oder Entschäumer.
   - Biozide, insbesondere Algizide, Fungizide oder das Pilzwachstum hemmende Substanzen.
   - Weitere üblicherweise in feuchtigkeitshärtenden Zusammensetzungen eingesetzte Substanzen.

Es kann sinnvoll sein, gewisse Bestandteile vor dem Einmischen in die Zusammensetzung chemisch oder physikalisch zu trocknen.

Die erfindungsgemäße Zusammensetzung enthält bevorzugt mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln, wie vorgängig beschrieben.

Die Zusammensetzung wird vorzugsweise unter Ausschluss von Feuchtigkeit hergestellt und aufbewahrt. Typischerweise ist die Zusammensetzung in einer geeigneten Verpackung oder Anordnung, wie insbesondere einem Fass, einem Beutel oder einer Kartusche, unter Ausschluss von Feuchtigkeit lagerstabil.

Die Zusammensetzung kann in Form einer einkomponentigen oder in Form einer zweikomponentigen Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.

Allgemein bedeutet der Begriff "härtbar" insbesondere, dass die Zusammensetzung unter dem Einfluss äußerer Bedingungen, insbesondere unter dem Einfluss in der Umgebung vorhandener und/oder bewusst zugeführter Feuchtigkeit aus einem relativ weichen, gegebenenfalls plastisch verformbaren Zustand in einen härteren Zustand übergehen kann. Allgemein kann die Vernetzung durch chemische und/oder physikalische Einflüsse erfolgen, neben der bereits erwähnten Feuchtigkeit also beispielsweise auch durch Zuführung von Energie in Form von Wärme, Licht oder sonstiger elektromagnetischer Strahlung, aber auch durch einfaches Inkontaktbringen der Zusammensetzung mit Luft oder einer reaktiven Komponente.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der Zusammensetzung auf mindestens einen Festkörper oder Artikel kommen die vorhandenen Silangruppen und gegebenenfalls vorhandene weitere feuchtigkeitshärtende Gruppen in Kontakt mit Feuchtigkeit, wodurch die Zusammensetzung aushärtet. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Maß für die Aushärtungsgeschwindigkeit dar.

Ein weiterer Aspekt der Erfindung ist eine gehärtete Zusammensetzung, wie sie durch Härtung einer zuvor beschriebenen feuchtigkeitshärtenden Zusammensetzung erhältlich ist.

Die Zusammensetzung verfügt im ausgehärteten Zustand über ausgeprägt elastische Eigenschaften, insbesondere eine hohe Festigkeit und eine hohe Dehnbarkeit, sowie über eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Schweiß- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung oder als Schutzanstrich gegen Korrosion, als Versiegelung, Anstrich, Lack oder Primer. Besonders geeignet ist sie als Klebstoff oder Dichtstoff oder Beschichtung, insbesondere für die Fugenabdichtung oder für elastische Klebeverbindungen in Bau- oder Industrieanwendungen.

Die Erfindung betrifft weiterhin die Verwendung einer feuchtigkeitshärtenden Zusammensetzung wie vorstehend beschrieben und/oder der gehärteten Zusammensetzung wie vorstehend beschrieben als Dichtstoff, Klebstoff oder Beschichtungsmaterial.

Für die Anwendung als Klebstoff oder Dichtstoff weist die feuchtigkeitshärtende Zusammensetzung bevorzugt eine pastöse Konsistenz mit strukturviskosen Eigenschaften auf. Ein solcher pastöser Klebstoff oder Dichtstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.

Verklebt oder abgedichtet werden können zwei gleichartige oder zwei verschiedene Substrate.

Geeignete Substrate sind insbesondere:
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaserverstärkte Kunststoffe (CFK), Glasfaserverstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.

Die Substrate können bei Bedarf vor dem Applizieren des Klebstoffs oder Dichtstoffs vorbehandelt werden, insbesondere durch physikalische und/oder chemische Reinigungsverfahren oder das Aufbringen eines Haftvermittlers, einer Haftvermittlerlösung oder eines Primers.

Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein.

Die unter Verwendung der erfindungsgemäßen Zusammensetzungen erhältlichen Klebstoffe, Dichtstoffe und Beschichtungen sind halten weitaus höheren Temperaturen Stand als die bekannten STP-basierten Systeme des Standes der Technik und könne daher in Bereichen verwendet werden, in denen sie lange Zeit erhöhten Temperaturen, d.h. Temperaturen oberhalb von 100°C ausgesetzt sind. So finden die erfindungsgemäßen Beschichtungen, Verklebungen oder Abdichtungen beispielsweise Anwendung im Baubereich, beispielsweise bei der Dacheindeckung, als Fassadendichtstoff, als Korrosionsschutzbeschichtung, Rohrleitungsbeschichtung oder industrielle Beschichtung, im Automobilbereich, im Bereich der Solartechnik oder der Elektronik.

### Beispiele

Die vorliegende Erfindung wird anhand der nachfolgenden Beispiele näher erläutert, ohne jedoch darauf beschränkt zu sein.

### Methoden und Materialien:

Klebstoffformulierungen wurden ohne Alterungsschutzmittel, mit Alterungsschutzmittel gemäß dem Stand der Technik und mit den erfindungsgemäßen Alterungsschutzmitteln hergestellt.

Es wurden Viskosität und Reaktivität der frisch hergestellten Mischung 7 Tage nach dem Abfüllen in Kartuschen (Lagerung bei 23°C) bestimmt. Die Kartuschen wurden 12 Wochen bei 50°C gelagert und die Änderung von Viskosität und Reaktivität bestimmt.

Ebenfalls 7 Tage nach dem Abfüllen wird eine Membran hergestellt und 2 Wochen unter Normbedingungen (23°C/50% rel. Feuchte) ausgehärtet.

Die physikalischen Eigenschaften (Härte, Zugfestigkeit, Spannungswert, Bruchdehnung) wurden zunächst an ungealterten Prüfkörpern gemessen.

Die Alterungsbeständigeit wurde bestimmt, indem die Membrane bis zu 33 Wochen in einem Umluftofen einer Temperatur von 90°C ausgesetzt wurde. Aus der gealterten Membrane wurden erneut Prüfkörper hergestellt und die physikalischen Eigenschaften (Härte, Zugfestigkeit, Spannungswert, Bruchdehnung) bestimmt. Gute Alterungsbeständigkeit erkennt man durch geringe Änderung der physikalischen Werte nach Lagerung bei 90°C.

Die Temperaturbeständigkeit der STP Formulierungen erfolgte durch Messung der Oxidationsinduktionszeit (OIT) mittels dynamischer Differenzkalorimetrie gemäß DIN EN ISO 11357-6:2013 bestimmt. Eine hohe OIT weist auf eine hohe Temperaturbeständigkeit hin.

In den Beispielen verwendete Edukte:

**Tabelle 1**

| Bezeichnung | Beschreibung | Hersteller |
|---|---|---|
| Desmoseal^{®} S XP 2458 | Aliphatisches silanterminiertes Polyurethan-Polymer | Covestro Deutschland AG |
| Desmoseal ^{®} S XP 2636 | | |
| Mesamoll^{®}, | Weichmacher | Lanxess AG |
| Jayflexe DINP | Weichmacher | Exxon |
| Cab-O-Sil^{®} TS 720 | Rheologieadditiv | Cabot Corporation |
| Omyalite^{®} 95T | Füllstoff | Omya AG |
| Dynasylan^{®} VTMO | Trocknungsmittel | Evonik Industries AG |
| Dynasylan^{®} 1146 | Haftvermittler | Evonik Industries AG |
| Vulkanox^{®} HS | Alterungsschutzmittel auf Basis von 2,2,4-Trimethyl-1,2-dihydroquinoline | Lanxess AG |
| Vulkanox^{®} 4020 | Alterungsschutzmittel auf Basis von N-(1,3-dimethylbutyl)-N'-phenyl-p-phenylendiamin | Lanxess AG |
| Irganox^{®}1 135 | Phenolisches Alterungsschutzmittel | BASF SE |
| Tinuvin^{®} 1130 | UV Absorber | |
| Tinuvin^{®} 292 | Lichtschutzmittel | |
| DBU, (1,8-Diazabicyclo [5.4.0] undec-7-en) | Katalysator | Sigma - Aldrich Corporation |

### Herstellung von feuchtigkeitshärtenden Formulierungen auf Basis silanterminierter Polymere (Beispiel Klebstoff)

Eine feuchtigkeitshärtende Klebstoffzusammensetzung auf Basis eines silanmodifzierten Polymers wurde gemäß der folgenden Vorschrift hergestellt: 2817 g von zuvor 16 Stunden bei 100°C im Umlufttrockenschrank getrocknetem Füllstoff Omyalite^{®} 95 T (Calciumcarbonat, Firma OmyaAG) werden mit 519,5 g Weichmacher (Mesamoll^{®}, Firma Lanxess AG), 1501 g Desmoseal^{®} S XP 2458 (Aliphatisches silanterminiertes Polyurethan-Polymer, Firma Covestro Deutschland AG), 41,5 g Cab-O-Sil^{®} TS 720 (hydrophobe pyrogene Kieselsäure, Firma Cabot Corporation), 0-23 g Alterungsschutzmittel (sowie ggf. weitere UV-/ Lichtschutzadditive) und 6 g 1,8-Diazabicyclo[5.4.0]undec-7-en (Katalysator, Sigma-Aldrich Corporation), sowie 115g Trocknungsmittel (Dynasylan^{®} VTMO, Vinyltrimethoxysilan, Firma Evonik Industries AGim Labordissolver mit Butterflyrührer (200 Umdrehungen/min) und Dissolverscheibe (2500 Umdrehungen/min) für 15 min unter statischem Vakuum und Kühlung dispergiert.

Die Klebstoffzusammensetzung wurde anschließend im Labordissolver mit Dissolverscheibe (1000 Umdrehungen/min mit einem Aminosilan 5 min unter statischem und anschließend 5 min unter dynamischem Vakuum (20 mbar) vermischt.

Die Mischungsherstellung wurde unter Kühlung durchgeführt, so dass während der Herstellung eine Temperatur von 65 °C nicht überschritten wurde.

Unter statischem Vakuum wird hierbei verstanden, dass die Apparatur bis auf einen Druck von 20 mbar evakuiert wird (dynamisches Vakuum) und danach die Verbindung zur Vakuumpumpe getrennt wird.

Es wurde ein Vergleichsversuch ohne Alterungsschutzmittel und Mischungen mit den verschiedenen Alterungsschutzmitteln in unterschiedlicher Dosierung hergestellt.

**Tabelle 2**

| Beispiel | Stabilisator | Stabilisator in Gew. % |
|---|---|---|
| 1.0 | Ohne ASM | 0 |
| 2.1/ 3.1 | Irganox^{®} 1135 | 0,4 |
| 1.1 | Irganox^{®} 1135 | 0,1 |
| 2.2/3.2 | Vulkanox^{®} HS/LG | 0,4 |
| 1.2 | Vulkanox^{®} HS/LG | 0,1 |
| 2.3/3.3 | Vulkanox^{®} 4020/LG | 0,4 |
| 1.3 | Vulkanox^{®} 4020/LG | 0,1 |

Die nach der oben beschriebenen Vorschrift erhaltenen Klebstoffzusammensetzungen wurden in Kartuschen abgefüllt und 7 Tage bei Raumtemperatur (23°C) gelagert. Dann werden die Formulierungen a) in flüssiger Form und b) in ausgehärteter Form geprüft.

### Prüfmethoden/Prüfungen am flüssigen System

Die Lagerstabilität der feuchtigkeitshärtenden Klebstoffzusammensetzungen wurde in bei 50°C getemperten Kartuschen (Viskosität) überprüft. Die Messung der Viskosität erfolgte auf dem Gerät Physica MCR 501 der Fa Anton Paar. Es wurde das Kegel/platte CP 25/1 mit Peltierheizung CPTD-200 eingesetzt.
Messprofil: d(gamma)/dt = 0,1 ... 100 1/s log; |Steigung| = 8 Pkt./dec; T= 23°C

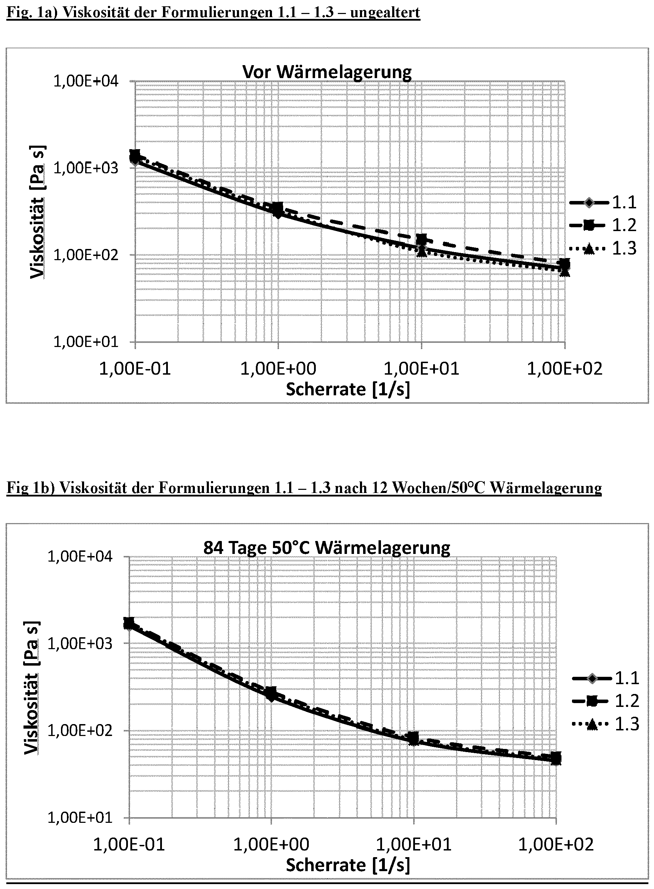

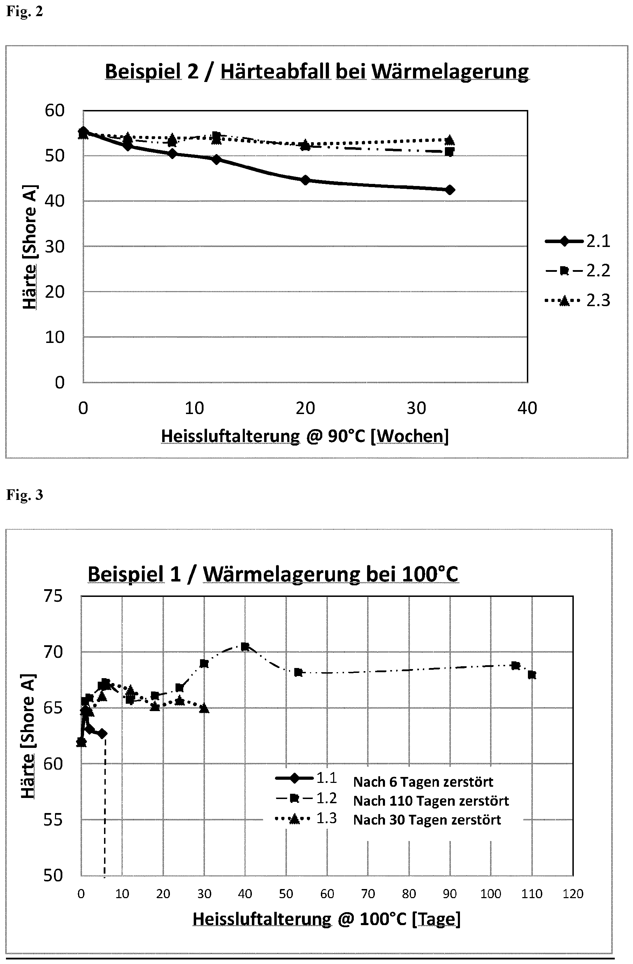

Die Änderung der Viskosität in Abhängigkeit von der Scherrate für die Beispiele 1.1, 1.2 und 1.3 nach a) 7 Tagen Lagerung bei RT und b) nach weiteren 84 Tagen Lagerung bei 50°C wird in Fig. 1 a) bzw. 1b) gezeigt.

### Beispiel 1

**Tabelle 3**

| **Beispiel** | **1.1** | **1.2** | **1.3** |
|---|---|---|---|
| Desmoseal S XP 2458 | 29,36 | 29,36 | 29,36 |
| Mesamoll | 10,46 | 10,46 | 10,46 |
| Irganox 1135 | 0,1 | | |
| Vulkanox HS/LG | | 0,1 | |
| Vulkanox 4020/LG | | | 0,1 |
| Cab-O-Sil TS 720 | 0,81 | 0,81 | 0,81 |
| Omyalite 95T | 55,35 | 55,35 | 55,35 |
| Dynasilan VTMO | 2,26 | 2,26 | 2,26 |
| DBU, (1,8-Diazabicyclo [5.4.0] undec-7-en) | 0,1 | 0,1 | 0,1 |
| Dynasilan 1146 | 1,54 | 1,54 | 1,54 |

Die Verwendung verschiedener Alterungsschutzmittel zeigt keine signifikanten Effekte auf die Viskosität der feuchtigkeitshärtenden Klebstoffzusammensetzungen.

### Beispiel 2

Die Mischungsherstellung erfolgt wie oben beschrieben.

**Tabelle 4**

| | 2.1 | 2.2 | 2.3 |
|---|---|---|---|
| | Irganox 1135 | Vulkanox HS | Vulkanox 4020 |
| Desmoseal S XP 2636 | 26,2 | 26,2 | 26,2 |
| JayflexDINP | 13,0 | 13,0 | 13,0 |
| Irganox 1135 | 0,4 | - | - |
| Vulkanox HS | - | 0,4 | - |
| Vulkanox 4020 | - | - | 0,4 |
| Tinuvin 1130 | 0,3 | 0,3 | 0,3 |
| Tinuvin 292 | 0,4 | 0,4 | 0,4 |
| Cab-O-Sil TS 720 | 0,81 | 0,81 | 0,81 |
| Omyalite 95T | 55,0 | 55,0 | 55,0 |
| Dynasilan VTMO | 2,26 | 2,26 | 2,26 |
| DBU | 0,12 | 0,12 | 0,12 |
| Dynasilan 1146 | 1,51 | 1,51 | 1,51 |

### Beispiel 3

**Tabelle 5**

| | 3.1 | 3.2 | 3.3 |
|---|---|---|---|
| | Irganox 1135 | Vulkanox HS | Vulkanox 4020 |
| Desmoseal S XP 2458 | 32,3 | 32,3 | 32,3 |
| JayflexDINP | 0,99 | 0,99 | 0,99 |
| Irganox 1135 | 0,4 | - | - |
| Vulkanox HS | - | 0,4 | - |
| Vulkanox 4020 | - | - | 0,4 |
| Tinuvin 1130 | 0,4 | 0,4 | 0,4 |
| Tinuvin 292 | 0,3 | 0,3 | 0,3 |
| Omyalite 95T | 61,35 | 61,35 | 61,35 |
| Dynasilan VTMO | 2,5 | 2,5 | 2,5 |
| DBU | 0,06 | 0,06 | 0,06 |
| Dynasilan 1146 | 1,7 | 1,7 | 1,7 |

**Tabelle 6**

| | Irganox 1135 | Vulkanox HS | Vulkanox 4020 |
|---|---|---|---|
| Beispiel | 2.1 | 2.2 | 2.3 |
| Filmtrockenzeit, h:min | 2:35 | 2:35 | 2:25 |
| Beispiel | 3.1 | 3.2 | 3.3 |
| Filmtrockenzeit, h:min | 1:40 | 1:35 | 1:40 |

Die Viskosität und Reaktivität (gemessen als Fimtrocknungszeit mit einem Drying Recorder gemäß DIN ISO 14022:2010-06) der Formulierungen werden durch die unterschiedlichen Alterungsschutzmittel nicht signifikant beeinflusst.

### a) Prüfmethoden/ Prüfungen am ausgehärteten System

Zur Bestimmung der phyikalischen Eigenschaften wurde 2mm dicke Membrane hergestellt. Dazu wurde mit Hilfe eines Rakels die Formulierung zu Membranen mit einer gleichmäßigen Schichtdicke von 2 mm auf eine Polyethylen-Folie aufgebracht und für 14 Tage bei 23°C und 50% Luftfeuchtigkeit ausgehärtet, wobei die Membranen nach 7 Tagen von der Folie gelöst und gewendet wurden. Anschließend wurden die physikalischen Eigenschaften und darauf basierend die Alterungsbeständigkeit der erhaltenen Membranen anhand der folgenden Verfahren bestimmt.

Zugfestigkeit, Bruchdehnung und Spannungswert bei 100% Dehnung nach DIN EN 53504. Shore A Härte gemäß DIN 53505. Hierzu wurden 3Membranen übereinandergelegt um die normgerechte Schichtdicke von 6mm zu erreichen.

**Tabelle 7**

| | **Irganox 1135** | **Vulkanox HS** | **Vulkanox 4020** |
|---|---|---|---|
| | **2.1** | **2.3** | **2.3** |
| Härte, Shore A | 55,4 | 55,2 | 54,9 |
| Zugfestigkeit, N/mm² | 2,67 | 2,8 | 2,74 |
| Bruchdehnung, % | 339 | 351 | 364 |
| Spannungswert 100%, N/mm² | 1,66 | 1,70 | 1,76 |

**Tabelle 8**

| | **Irganox 1135** | **Vulkanox HS** | **Vulkanox 4020** |
|---|---|---|---|
| | **3.1** | **3.2** | **3.3** |
| Härte, Shore A | 69 | 72 | 66 |
| Zugfestigkeit, N/mm² | 4,1 | 3,9 | 4,1 |
| Bruchdehnung, % | 126 | 100 | 136 |
| Spannungswert 100%, N/mm² | 4 | 3,9 | 4 |

Die physikalischen Eigenschaften der nicht gealterten Prüfkörper sind, unabhängig vom verwendeten Alterungsschutzmittel, nahezu gleich.

### b) Prüfmethoden/ Prüfungen der Oxidations-/ Alterungsbeständigkeit

Als beschleunigte Alterungprüfung wurde ein DSC OIT Experiment durchgeführt. Die Oxidationsinduktionszeit (OIT) wurde mit einem DSC Experiment in einem Kalorimeter Pyris-1 (Fa. Perkin-Elmer) bestimmt. Es wurden aus den zu untersuchenden Membranen Stücke von ca. 7 mg Gewicht mit einer Lochstanze ausgeschnitten. Die Proben wurden ohne Vorkonditionierung mit hoher Heizrate (200K/min.) in einem Kalorimeter von RT auf 170°C Lagerungstemperatur aufgeheizt und in reinem Sauerstoff für 180 Minuten gelagert.

Die OIT ist der Zeitpunkt, bei dem eine exotherme Oxidationsreaktion einsetzt.

**Tabelle 9**

| | **Irganox 1135** | **Vulkanox HS** | **Vulkanox 4020** |
|---|---|---|---|
| | **2.1** | **2.2** | **2.3** |
| DCS OIT, min | 58,7 | >180 | >180 |

**Tabelle 10**

| | **Irganox 1135** | **Vulkanox HS** | **Vulkanox 4020** |
|---|---|---|---|
| | **3.1** | **3.2** | **3.3** |
| DSC OIT | 69,6 | >180 | >180 |

Die erfindungsgemäßen Beispiele 2.2, 2.3, 3.2 und 3.3 weisen mit einer Oxidationsinduktionszeit >180 Minuten die höchste Temperaturbeständigkeit auf, d.h. die Proben wurden während der Versuchsdauer nicht zerstört. Die Proben mit einem Alterungsschutzmittel nach dem Stand der Technik werden nach 59 min. bzw. 69 min. zerstört.

Eine Probe ohne Alterungsschutzmittel wird bei dieser Prüfung schon nach 4 min. zerstört.

### Beständigkeit bei Wärmelagerung

Die ausgehärtete Klebstoff-, Dichtstoff- bzw. Beschichtungsmittelzusammensetzungen wurden in Form einer 2 mm starken Membran über einen Zeitraum von bis zu 33 Wochen in einem Umluftofen bei 90°C gelagert. In regelmäßigen Abständen werden die physikalischen Eigenschaften geprüft. Alle 7 Tage wird die Membrane aus dem Umluftschrank geholt, abgekühlt und Prüfkörper ausgestanzt.

Die Formulierung 2.1 gemäß dem Stand der Technik zeigt einen deutlichen Abfall der Shore A Härte. Die Shore A Härte der erfindungsgemäßen Formulierungen 2.2 und 2.3 ist nach 20 Wochen Wärmelagerung nahezu unverändert.

Membranen der Formulierungen aus Beispiel 1 wurden bei 100°C in einem Umluftofen gealtert. Die Formulierung gemäß dem Stand der Technik war nach 6 Tagen zerstört. Die erfindungsgemäßen hatten eine Lebensdauer von 30 Tagen, bzw. 110 Tagen.

## Patentansprüche

1. Verwendung von aminofunktionellen Verbindungen, ausgenommen Verbindungen vom Typ der Oxalanilide bzw. Verbindungen, die 2,2,6,6 Tetramethylpiperidinyl-Gruppen aufweisen, als Alterungsschutzmittel in Zusammensetzungen, insbesondere zum Kleben, Abdichten oder Beschichten, enthaltend mindestens ein silanfunktionelles Prepolymer mit mindestens einer Alkoxysilangruppe.

2. Zusammensetzungen, insbesondere zum Kleben, Abdichten oder Beschichten, enthaltend oder bestehend aus
A) mindestens ein/einem silanfunktionelles/en Prepolymer mit mindestens einer Alkoxysilangruppe,
B) mindestens eine/einer aminofunktionelle/n Verbindung, die als Alterungsschutzmittel wirkt, wobei Verbindungen vom Typ der Oxalanilide bzw. Verbindungen, die 2,2,6,6 Tetramethylpiperidinyl-Gruppen aufweisen, von Komponente B ausgenommen sind,
C) gegebenenfalls eine/einer Katalysatorkomponente, und
D) gegebenenfalls Zusatzstoffe/n und/oder Hilfsstoffe/n, ausgenommen Alterungsschutzmittel, die unter die Definition der Komponente B fallen.

3. Verwendung gemäß Anspruch 1 oder Zusammensetzung gemäß Anspruch 2, **dadurch gekennzeichnet, dass** das mindestens eine silanfunktionelle Prepolymer ausgewählt ist aus der Liste aus Prepolymeren, die gebildet wird aus Polyurethanen mit mindestens einer Alkoxysilangruppe, polymeren Polyisocyanaten mit mindestens einer Alkoxysilangruppe, polymeren Polyolen mit mindestens einer Alkoxysilangruppe, Polyetherpolyolen mit mindestens einer Alkoxysilangruppe, Polyesterpolyolen mit mindestens einer Alkoxysilangruppe, Polycarbonatpolyolen mit mindestens einer Alkoxysilangruppe, Polyacrylatpolyolen mit mindestens einer Alkoxysilangruppe, Polymethacrylatpolyolen mit mindestens einer Alkoxysilangruppe und Polyurethanpolyole mit mindestens einer Alkoxysilangruppe.

4. Verwendung gemäß Anspruch 1 oder 3 oder Zusammensetzung gemäß Anspruch 2 oder 3, **dadurch gekennzeichnet, dass** das mindestens eine silanfunktionelle Prepolymer mit mindestens einer Alkoxysilangruppe ein zahlenmittleres Molekulargewicht Mn von höchstens 30000 g/mol, bevorzugt höchstens 20000 g/mol, besonders bevorzugt höchstens 15000 g/mol aufweist.

5. Verwendung gemäß Anspruch 1, 3 oder 4 oder Zusammensetzung gemäß einem der Ansprüche 2 bis 4, **dadurch gekennzeichnet, dass** das mindestens eine silanfunktionelle Prepolymer mindestens eine Alkoxysilangruppe (bevorzugt mindestens zwei Alkoxysilangruppen) der allgemeinen Formel (I)
*-R³-Si(R¹)₃₋ₐ(OR²)ₐ (I)
wobei
R¹ für eine Alkylgruppe mit 1 bis 8 C-Atomen steht;
R² für eine Alkylgruppe mit 1 bis 12 C-Atomen steht;
R³ für eine lineare oder verzweigte, gegebenenfalls cyclische, Alkylengruppe mit 1 bis 18 C-Atomen, gegebenenfalls mit aromatischen Anteilen, und gegebenenfalls mit einem oder mehreren Heteroatomen, steht;
a für einen Wert von 1 oder 2 oder 3 steht; und
* für eine freie Valenz des damit gekennzeichneten Restes/Strukturfragments, an die das Prepolymer bindet, steht.

6. Verwendung gemäß Anspruch 1 oder 3 bis 5 oder Zusammensetzung gemäß einem der Ansprüche 2 bis 5, **dadurch gekennzeichnet, dass** die Alkoxyreste der Alkoxysilangruppen des mindestens einen silanfunktionellen Prepolymers Methoxy- und/ oder Ethoxygruppen sind.

7. Verwendung gemäß Anspruch 1 oder 3 bis 6 oder Zusammensetzung gemäß einem der Ansprüche 2 bis 6, **dadurch gekennzeichnet, dass** an die Termini des mindestens einen silanfunktionellen Prepolymers jeweils eine Alkoxysilangruppe bindet.

8. Verwendung gemäß Anspruch 1 oder 3 bis 7 oder Zusammensetzung gemäß einem der Ansprüche 2 bis 7, **dadurch gekennzeichnet, dass** die mindestens eine aminofunktionelle Verbindung, die als Alterungsschutzmittel wirkt, wenigstens eine sekundäre Aminogruppe aufweist, bei der wenigstens einer der Reste ein gegebenenfalls mit Alkyl- oder Aralkyl- oder sekundären oder tertiären Aminogruppen substituierter Arylrest, bevorzugt ein gegebenenfalls mit Alkyl- oder Aralkyl- oder sekundären oder tertiären Aminogruppen substituierter Phenylrest ist; wobei Verbindungen vom Typ der Oxalanilide bzw. Verbindungen, die 2,2,6,6 Tetramethylpiperidinyl-Gruppen aufweisen, von den aminofunktionellen Verbindungen, die als Alterungsschutzmittel wirken, ausgenommen sind.

9. Verwendung gemäß Anspruch 1 oder 3 bis 8 oder Zusammensetzung gemäß einem der Ansprüche 2 bis 8, **dadurch gekennzeichnet, dass** die mindestens eine aminofunktionelle Verbindung, die als Alterungsschutzmittel wirkt, ausgewählt ist aus der Gruppe folgender Verbindungen: 2,2,4-Trimethyl-1,2-dihydroquinolin (TMQ), N,N'-Bis-(1,4-dimethylpentyl)-p-phenylenediamin, N-Isopropyl-N'-phenyl-p-phenylendiamin, N-(1,3-dimethylbutyl)-N'-phenyl-p-phenylen-diamin, N-Phenyl-l-naphthylamin, N-Phenyl-1-naphthylamin, Bis(4-octylphenyl)amin (auch octyliertes Diphenylamin) und styrolisiertes Diphenylamin.

10. Verwendung gemäß Anspruch 1 oder 3 bis 9 oder Zusammensetzung gemäß einem der Ansprüche 2 bis 9, **dadurch gekennzeichnet, dass** die in der Zusammensetzung enthaltende Gesamtmenge an aminofunktionellen Verbindungen, die als Alterungsschutzmittel wirken, 0,01 bis 2 Gew.-%, bevorzugt von 0,1 bis 1 Gew.-%, noch mehr bevorzugt 0,1 bis 0,5 Gew.-%, jeweils bezogen auf das Gesamtgewicht der Zusammensetzung, beträgt.

11. Verfahren zur Härtung einer Zusammensetzung gemäß einem der Ansprüche 2 bis 11, **dadurch gekennzeichnet, dass** die Zusammensetzung mit Wasser kontaktiert wird.

12. Gehärtete Zusammensetzung erhältlich gemäß Anspruch 11.

13. Verwendung einer Zusammensetzung gemäß einem der Ansprüche 2 bis 10 oder einer gehärteten Zusammensetzung gemäß Anspruch 12 als Beschichtung, Klebstoff oder Dichtstoff.

14. Verwendung von Beschichtungen, Klebstoff oder Dichtstoff gemäß Anspruch 13 im Baubereich, beispielsweise bei der Dacheindeckung, als Fassadendichtstoff, als Korrosionsschutzbeschichtung, als Rohrleitungsbeschichtung oder als industrielle Beschichtung, im Automobilbereich, im Bereich der Solartechnik oder der Elektronik.

15. Mit einer Zusammensetzung gemäß einem der Ansprüche 2 bis 10 oder einer gehärteten Zusammensetzung gemäß Anspruch 12 versehenes Substrat.
